# EUROPEAN PATENT APPLICATION

(11) **EP 4 557 085 A1**
(43) Date of publication of application: **21.05.2025**
(21) Application number: 24213305.6
(22) Date of filing: 15.11.2024
(51) Int. Cl.: G06F 8/65

(54) **TECHNIQUES FOR FIRMWARE UPDATES IN BUILDING AND EQUIPMENT CONTROLLERS**

(30) Priority: 16.11.2023 US 202318511063
(71) Applicant: Trane International Inc., Davidson, NC 28036 (US)
(72) Inventor: DAYALAN, Udhaya Kumar, Davidson, North Carolina 28036 (US); MCKEEVER, James Kenneth, Davidson, North Carolina 28036 (US); MEYERS, Brian, Davidson, North Carolina 28036 (US)
(74) Representative: Haseltine Lake Kempner LLP

(57) **Abstract**

Devices, systems, and methods are described for updating firmware in building and equipment controllers. Several embodiments include a fleet manager configured to simplify and automate remote firmware updates to connected (e.g., cloud-connected) embedded equipment and building control devices. The updates may be performed immediately or scheduled, such as based on user preferences, constraints, and conditions and/or device parameters and capabilities. In many embodiments, the fleet manager may engage in an interactive process, such as with a client, to schedule and perform updates.

## Description

### TECHNOLOGICAL FIELD

The present disclosure relates generally to improved devices, systems, and methods for remote firmware updates for building and equipment controllers.

### BACKGROUND

Generally, a building management system may be responsible for the automatic centralized control of various equipment in a building, such as heating, ventilation and air conditioning (HVAC), electrical, lighting, shading, access control, security systems, manufacturing equipment, and other interrelated systems. Building management systems are typically utilized for one or more of improved occupant comfort, efficient operation of building systems, reduction in energy consumption, reduced operating and maintaining costs, and increased security. For example, building management system functionality may keep a buildings climate within a specified range, provide light to rooms based on occupancy, monitor performance and device failures, and provide malfunction alarms to building maintenance staff. Building management systems are frequently utilized in commercial, institutional, and industrial buildings to reduce building energy and maintenance costs compared to a non-controlled building. Building management systems may also be utilized in residential buildings.

Building management systems include one or more controllers (e.g., embedded and/or programmable logic controllers) for directing and monitoring operations of equipment in a building. Controllers are typically small, purpose-built computers with input and output capabilities. These controllers typically operate based on firmware. Generally, firmware is a specific class of computer software that provides the low-level control for a device's specific hardware. Firmware, such as the BIOS of a personal computer, may contain basic functions of a device, and may provide hardware abstraction services to higher-level software such as operating systems of workstations. For less complex devices, firmware may act as the complete operating system for the device, performing all control, monitoring and data manipulation functions. Firmware is usually held in non-volatile memory devices, such as read-only memory (ROM), erasable programmable read-only memory (EPROM), electrically erasable programmable read-only memory (EEPROM), and flash memory.

### BRIEF SUMMARY

Devices, systems, and methods are disclosed for updating firmware in building and equipment controllers. Several embodiments include a fleet manager configured to simplify and automate remote firmware updates to connected (e.g., cloud-connected) embedded equipment and building control devices. The updates may be performed immediately or scheduled, such as based on user preferences, constraints, and conditions and/or device parameters and capabilities. In many embodiments, the fleet manager may engage in an interactive process, such as with a client, to schedule and perform updates.

The present disclosure thus includes, without limitation, the following example embodiments. Some example implementations provide a computer-implemented method for managing firmware updates for a fleet of controllers, the method comprising: identifying a plurality of controllers for a firmware update based on a predefined controller grouping, wherein the plurality of controllers each include an on-board memory with a current firmware; determining a set of controllers located in a building, the set of controllers determined based on a controller mapping, and the set of controllers included in the plurality of controllers for the firmware update; retrieving client data corresponding to the set of controllers; determining, based on a client-defined constraint in the client data, approval is required to perform the firmware update on the set of controllers; requesting, automatically, approval to perform the firmware update on the set of controllers based on contact information included in the client data; receiving authorization to perform the firmware update on the set of controllers in response to requesting the approval; communicating, over a network, the firmware update to a first controller in the set of controllers based on the authorization; and initiating, over the network, performance of the firmware update on the first controller in the set of controllers based on the authorization.

Other example implementations provide a server computer system for managing a fleet of controllers, comprising: a memory; and a processor coupled to the memory configured to: identify, by a server system, a plurality of controllers for a firmware update based on a predefined controller grouping, wherein the plurality of controllers each include an on-board memory with a current firmware; determine, by the server system, a set of controllers located in a building, the set of controllers determined based on a controller mapping, and the set of controllers included in the plurality of controllers for the firmware update; retrieve, by the server system, client data corresponding to the set of controllers; determine, by the server system and based on a client-defined constraint in the client data, approval is required to perform the firmware update on the set of controllers; request, automatically and by the server system, approval to perform the firmware update on the set of controllers based on contact information included in the client data; receive, by the server system, authorization to perform the firmware update on the set of controllers in response to requesting the approval; communicate, over a network and by the server system, the firmware update to a first controller in the set of controllers based on the authorization; and initiating, over the network and by the server system, performance of the firmware update on the first controller in the set of controllers based on the authorization.

Still other implementations provide a non-transitory computer readable storage medium including instructions that, when executed by a processor, cause the processor to perform operations for managing a fleet of controllers, the operations comprising: identifying a plurality of controllers for a firmware update based on a predefined controller grouping, wherein the plurality of controllers each include an on-board memory with a current firmware; determining a set of controllers located in a building, the set of controllers determined based on a controller mapping, and the set of controllers included in the plurality of controllers for the firmware update; retrieving client data corresponding to the set of controllers; determining, based on a client-defined constraint in the client data, approval is required to perform the firmware update on the set of controllers; requesting, automatically, approval to perform the firmware update on the set of controllers based on contact information included in the client data; receiving authorization to perform the firmware update on the set of controllers in response to requesting the approval; communicating, over a network, the firmware update to a first controller in the set of controllers based on the authorization; and initiating, over the network, performance of the firmware update on the first controller in the set of controllers based on the authorization.

These and other features, aspects, and advantages of the disclosure will be apparent from a reading of the following detailed description together with the accompanying drawings, which are briefly described below. The disclosure includes any combination of two, three, four, or more of the above-noted embodiments as well as combinations of any two, three, four, or more features or elements set forth in this disclosure, regardless of whether such features or elements are expressly combined in a specific embodiment description herein. This disclosure is intended to be read holistically such that any separable features or elements of the disclosed disclosure, in any of its various aspects and embodiments, should be viewed as intended to be combinable unless the context clearly dictates otherwise.

### BRIEF DESCRIPTION OF THE SEVERAL VIEWS OF THE DRAWINGS

For a detailed description of various exemplary embodiments, reference will now be made to the accompanying drawings in which:
FIG. 1 illustrates an exemplary operating environment for a fleet manager according to some embodiments.
FIG. 2 illustrates various aspects of a HVAC system according to some embodiments.
FIGS. 3A and 3B illustrate exemplary configurations of controllers according to some embodiments.
FIG. 4 illustrates various aspects of an operating environment for a fleet manager according to some embodiments.
FIG. 5 illustrates an exemplary controller mapping according to some embodiments.
FIGS. 6A and 6B illustrate exemplary controller groupings according to some embodiments.
FIG. 7 illustrates various aspects of arranging a firmware update according to some embodiments.
FIG. 8 illustrates a logic flow for arranging and performing a firmware update according to some embodiments.
FIG. 9 illustrates control circuitry according to some embodiments.

### DETAILED DESCRIPTION

The following discussion is directed to various exemplary embodiments. However, one of ordinary skill in the art will understand that the examples disclosed herein have broad application, and that the discussion of any embodiment is meant only to be exemplary of that embodiment, and not intended to suggest that the scope of the disclosure, including the claims, is limited to that embodiment.

The drawing figures are not necessarily to scale. Certain features and components herein may be shown exaggerated in scale or in somewhat schematic form and some details of conventional elements may not be shown in interest of clarity and conciseness.

In the following discussion and in the claims, the terms "including" and "comprising" are used in an open-ended fashion, and thus should be interpreted to mean "including, but not limited to...." Also, the term "couple" or "couples" is intended to mean either an indirect or direct connection. Thus, if a first device couples to a second device, that connection may be through a direct connection of the two devices, or through an indirect connection that is established via other devices, components, nodes, and connections. Further, when used herein (including in the claims), the words "about," "generally," "substantially," "approximately," and the like mean within a range of plus or minus 10% unless otherwise stated herein.

Firmware, like all software, periodically needs to be patched, upgraded, and/or updated, such as to maintain security or improve performance. Historically, firmware updates have been accomplished on site by a qualified technician. However, this is a resource intensive process with many inefficiencies. For example, travel time to and from buildings can take a considerable amount of time and result in wear and tear on vehicles. Further, site visits by qualified technicians typically must occur during normal business hours, however, updating firmware frequently requires equipment to be taken offline, resulting in many inconveniences and interruptions in the normal operation of the building. For example, if a controller being updated controls HVAC equipment, then the HVAC equipment is typically taken offline while the update is performed, resulting in an uncomfortable environment for building personnel. In another example, a piece of manufacturing equipment may be taken offline while its controller is updated, resulting in manufacturing slowdowns. Further, special and/or supervised access may be required for site visits. For example, jails/prisons, many government facilities, and parts of hospitals may require special and/or supervised access. More generally, access to many types of buildings has become much more difficult, such as due to the global pandemic Additionally, updates may be required for numerous controllers in a building and requiring onsite personnel may necessitate many updates to be performed simultaneously, resulting in many pieces of equipment being simultaneously unavailable.

Adding further complexity, many clients (e.g., building owner/operator) may not want updates or may want updates performed based on constraints/conditions to reduce inconveniences caused by the updates. Adding still further complexity, controllers come in numerous versions and types, have many different sets of capabilities and hardware, and are utilized to control a wide variety of equipment. Accordingly, identifying which controllers to update, how to update them, when they can be updated, and where they are located presents a complicated and difficult task that is prone to errors and oversights, especially when manually performed. These limitations can drastically reduce the availability and desirability of firmware updates, contributing to excessive inconveniences and numerous inefficiencies. Accordingly, as discussed in more detail below, embodiments disclosed hereby include a fleet manager configured to remotely manage and control firmware updates in an efficient and reliable manner that reduces inconveniences and improves equipment availability.

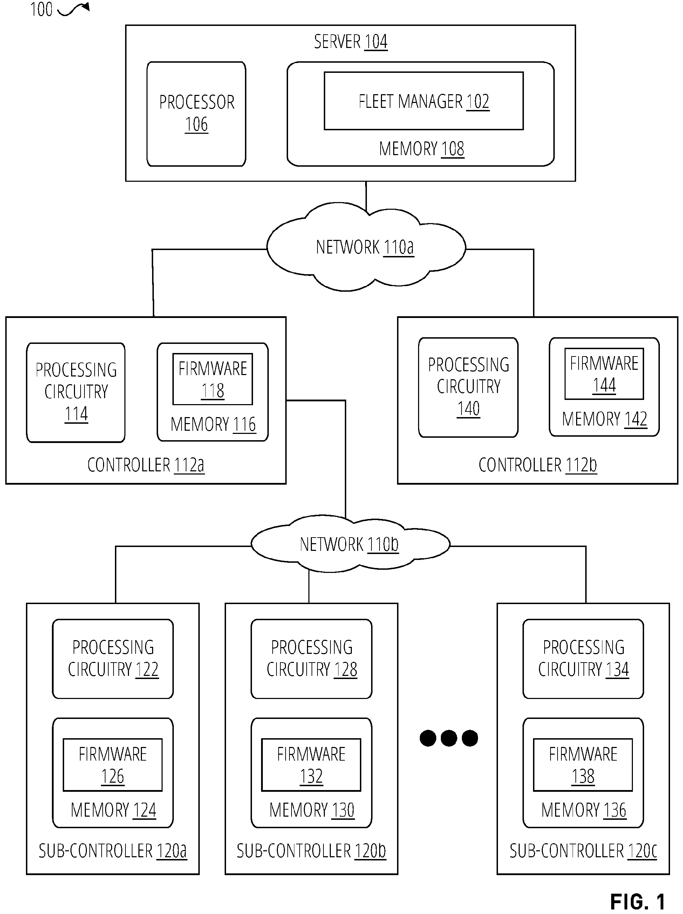

FIG. 1 illustrates an operating environment 100 for fleet manager 102 according to some embodiments. Operating environment 100 includes a server 104, networks 110a, 110b, controllers 112a, 112b (collectively referred to as controllers 112), and one or more sub-controllers 120a, 120b, 120c (collectively referred to as sub-controllers 120). The controllers 112 may be communicatively coupled to the server 104 via network 110a. The sub-controllers 120 may be communicatively coupled to controller 112a via network 110b. In various embodiments, the server 104 may include a processor 106 and memory 108 comprising fleet manager 102. In various such embodiments, the server 104 may implement fleet manager 102 to remotely manage and update firmware on one or more of the controllers 112 and/or sub-controllers 120. It will be appreciated that one or more components of FIG. 1 may be the same or similar to one or more other components disclosed hereby. Further, aspects discussed with respect to various components in FIG. 1 may be implemented by one or more other components from one or more other embodiments without departing from the scope of this disclosure. Embodiments are not limited in this context.

Each of the controllers 112 and sub-controllers 120 may be coupled to and control one or more devices in a building, such as HVAC equipment, industrial equipment, manufacturing equipment, lighting units, sensors, one or more other controllers (e.g., sub-controllers) and the like. In various embodiments, each controller or sub-controller may include hardware (e.g., circuitry, dedicated logic, programmable logic, an embedded controller, a microcontroller, a programmable gate array, a processor, a processing device, a central processing unit (CPU), a system-on-chip (SoC), memory, etc.), software (e.g., instructions running/executing on a processing device), firmware (e.g., microcode), or a combination thereof. In the illustrated embodiment, each of the controllers 112 and sub-controllers 120 include processing circuitry and memory that implements firmware to control devices coupled thereto. Accordingly, controller 112a may include processing circuitry 114 and memory 116 with firmware 118; controller 112b may include processing circuitry 140 and memory 142 with firmware 144; sub-controller 120a may include processing circuitry 122 and memory 124 with firmware 126; sub-controller 120b may include processing circuitry 128 and memory 130 with firmware 132; and sub-controller 120c may include processing circuitry 134 and memory 136 with processing circuitry 134. In many embodiments, although not illustrated, the controller memories may include additional contents beyond the firmware. For example, controllers may include firmware and one or more other contents, such as application software. For example, the application software may include an operating system, a database, libraries, applications, or site-specific data, such as trend logs, custom graphics, custom programs, user preferences, and/or the like.

The fleet manager 102 may operate to remotely map, manage, and update firmware for a fleet of controllers in an efficient and reliable manner. The fleet manager 102 may comprise one or more sets of computer-executable instructions on one or more processing devices that implement one or more of the features and/or functionalities discussed herein. The fleet manager 102 may be communicatively couplable to a each of the controllers and sub-controllers via one or more networks. For example, the network 110a may comprise the internet and network 110b may include a local area network.

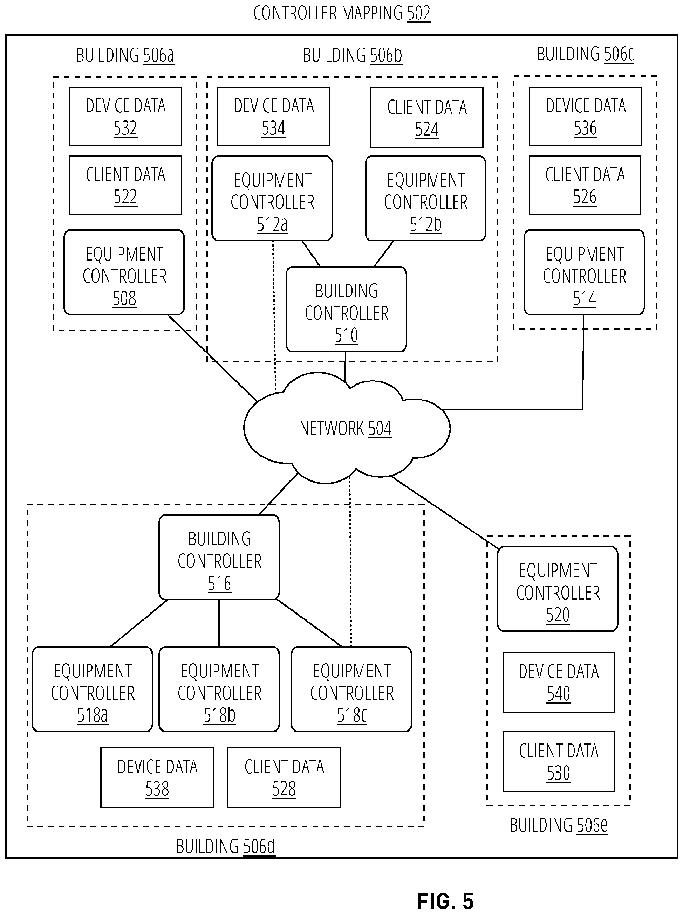

In many embodiments, the fleet manager 102 may generate a mapping of controllers that includes various parameters of the controllers, such as location, capabilities, hardware, version, type, location, connectivity, and the like. In many such embodiments, the mapping may be utilized to determine which controllers need updates and how to go about performing the updates. For example, if fleet manager 102 determines a controller has insufficient on-board memory (e.g., memory 130 of sub-controller 120b) to store a firmware update simultaneously with the current firmware (e.g., firmware 132), fleet manager 102 may determine to back up the current firmware to a remote location (e.g., the memory 108 of server 104 or the memory 116 of controller 112a) prior to performing to update. In some embodiments, the various parameters of a controller may be stored in device data (see e.g., FIG. 5). The server 102 may include a server system, server computer system, and/or cloud-based computing system. In many embodiments, the server 102 may include a distributed computing system.

In various embodiments, the fleet manager 102 may adhere to various conditions and constraints for performing firmware updates that are provided by different interested entities (e.g., manufacturers, dealers, distributors, clients, operators, and the like). For example, clients may provide specific timing constraints for performing updates. In many embodiments, the fleet manager 102 may engage in an interactive process with interested entities to determine conditions and constraints for performing firmware updates. In various embodiments, one or more of these conditions and constraints may be stored in client data (see e.g., FIG. 5). These and other advantageous aspects of fleet managers disclosed hereby will be discussed in more detail below.

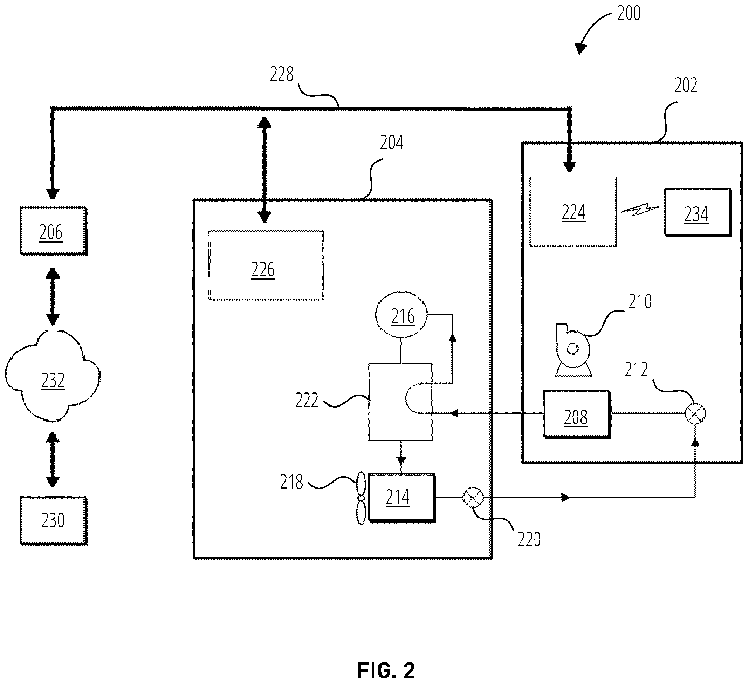

FIG. 2 is shown to provide an overview an HVAC system 200 generally. In various embodiments, one or more controllers or sub-controllers described hereby may control operation of one or more components of the HVAC system 200. Accordingly, FIG. 2 is provided to show exemplary, non-limiting, controllers and equipment that may be managed by a fleet manager. FIG. 2 shows a schematic diagram of a typical HVAC system 200. In some embodiments, the HVAC system 200 comprises a heat pump system that may be selectively operated to implement one or more substantially closed thermodynamic refrigerant cycles to provide a cooling functionality (hereinafter a "cooling mode") and/or a heating functionality (hereinafter a "heating mode"). The embodiments depicted in FIG. 2 is configured in a cooling mode. The HVAC system 200, in some embodiments is configured as a split system heat pump system, and generally comprises an indoor unit 202, an outdoor unit 204, and a system controller 206 that may generally control operation of the indoor unit 202 and/or the outdoor unit 204.

It will be appreciated that one or more components of FIG. 2 may be the same or similar to one or more other components disclosed hereby. For example, system controller 206 may be the same or similar to controller 112a, indoor controller 224 may be the same or similar to sub-controller 120a, and/or outdoor controller 226 may be the same or similar to sub-controller 120b. Further, aspects discussed with respect to various components in FIG. 2 may be implemented by one or more other components from one or more other embodiments without departing from the scope of this disclosure. Embodiments are not limited in this context.

Indoor unit 202 generally comprises an indoor air handling unit comprising an indoor heat exchanger 208, an indoor fan 210, an indoor metering device 212, and an indoor controller 224. The indoor heat exchanger 208 may generally be configured to promote heat exchange between a refrigerant carried within internal tubing of the indoor heat exchanger 208 and an airflow that may contact the indoor heat exchanger 208 but that is segregated from the refrigerant.

The indoor metering device 212 may generally comprise an electronically-controlled motor-driven electronic expansion valve (EEV). In some embodiments, however, the indoor metering device 212 may comprise a thermostatic expansion valve, a capillary tube assembly, and/or any other suitable metering device.

Outdoor unit 204 generally comprises an outdoor heat exchanger 214, a compressor 216, an outdoor fan 218, an outdoor metering device 220, a switch over valve 222, and an outdoor controller 226. The outdoor heat exchanger 214 may generally be configured to promote heat transfer between a refrigerant carried within internal tubing of the outdoor heat exchanger 214 and an airflow that contacts the outdoor heat exchanger 214 but is segregated from the refrigerant.

The outdoor metering device 220 may generally comprise a thermostatic expansion valve. In some examples, however, the outdoor metering device 220 may comprise an electronically-controlled motor driven EEV similar to indoor metering device 212, a capillary tube assembly, and/or any other suitable metering device.

In some examples, the switch over valve 222 may generally comprise a four-way reversing valve. The switch over valve 222 may also comprise an electrical solenoid, relay, and/or other device configured to selectively move a component of the switch over valve 222 between operational positions to alter the flow path of refrigerant through the switch over valve 222 and consequently the HVAC system 200.

The system controller 206 may generally be configured to selectively communicate with the indoor controller 224 of the indoor unit 202, the outdoor controller 226 of the outdoor unit 204, and/or other components of the HVAC system 200. In some embodiments, the system controller 206 may be configured to control operation of the indoor unit 202, and/or the outdoor unit 204. In some embodiments, the system controller 206 may be configured to monitor and/or communicate with a plurality of temperature sensors associated with components of the indoor unit 202, the outdoor unit 204, and/or the outdoor ambient temperature.

In some examples, the system controller 206 may be configured for selective bidirectional communication over a communication bus 228. In some examples, the system controller 206 may be configured to selectively communicate with components of the HVAC system 200 and/or any other device 230 via a communication network 232. For example, device 230 may include server 104 and communication network 232 may include network 110a.

The indoor controller 224 may be carried by the indoor unit 202 and may generally be configured to receive information inputs, transmit information outputs, and/or otherwise communicate with the system controller 206, the outdoor controller 226, and/or any other device 230 via the communication bus 228 and/or any other suitable medium of communication.

The indoor EEV controller 234 may be configured to receive information regarding temperatures and/or pressures of the refrigerant in the indoor unit 202. More specifically, the indoor EEV controller 234 may be configured to receive information regarding temperatures and pressures of refrigerant entering, exiting, and/or within the indoor heat exchanger 208.

The outdoor controller 226 may be carried by the outdoor unit 204 and may be configured to receive information inputs, transmit information outputs, and/or otherwise communicate with the system controller 206, the indoor controller 224, and/or any other device 230 via the communication bus 228 and/or any other suitable medium of communication. In some embodiments, the outdoor controller 226 may be configured to receive information related to an ambient temperature associated with the outdoor unit 204, information related to a temperature of the outdoor heat exchanger 214, and/or information related to refrigerant temperatures and/or pressures of refrigerant entering, exiting, and/or within the outdoor heat exchanger 214 and/or the compressor 216.

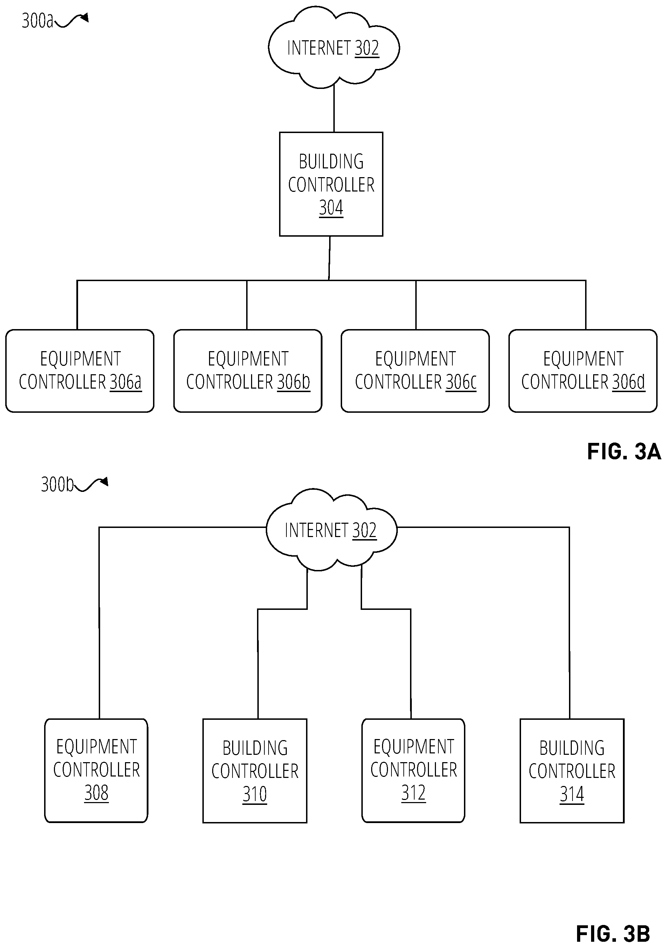

FIGS. 3A and 3B illustrate exemplary configurations 300a, 300b of controllers according to some embodiments. Generally, embodiments described hereby may include a plurality of building controllers and/or equipment controllers communicatively coupled to a network (e.g., the internet) directly or indirectly in a variety of configurations. The building and equipment controllers may receive instructions and/or data from remote sources (e.g., fleet manager implemented by cloud infrastructure) via the network, such as for firmware updates. FIG. 3A includes configuration 300a with a building controller 304 coupled to the internet 302 and equipment controllers 306a, 306b, 306c, 306d (collectively referred to as building controllers 306). FIG. 3B includes 300b with equipment controllers 308, 312 and building controllers 310, 314 coupled to the internet 302. It will be appreciated that one or more components of FIGS. 3A and 3B may be the same or similar to one or more other components disclosed hereby. For example, internet 302 may be the same or similar to network 110a, building controller 304 may be the same or similar to controller 112a, one or more of equipment controllers 306 may be the same or similar to one or more of sub-controllers 120, and/or one or more of equipment controllers 308, 312 and building controllers 310, 314 may be the same or similar to controller 112b. Further, aspects discussed with respect to various components in FIGS. 3A and 3B may be implemented by one or more other components from one or more other embodiments without departing from the scope of this disclosure. Embodiments are not limited in this context.

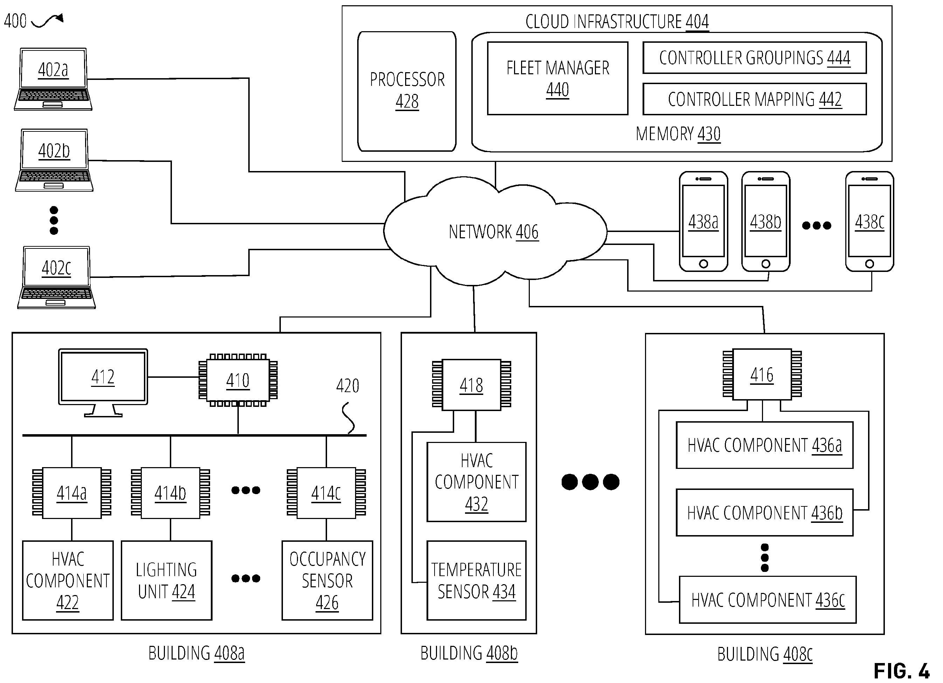

FIG. 4 illustrates various aspects of an operating environment 400 for fleet manager 440 according to some embodiments. Operating environment 400 includes one or more fleet access computers 402a, 402b, 402c (collectively referred to as fleet access computers 402), cloud infrastructure 404, network 406, buildings 408a, 408b, 408c (collectively referred to as buildings 408), and one or more client devices 438a, 438b, 438c (collectively referred to as client devices 438). As previously mentioned, embodiments described hereby may include fleet manager 440 for remotely managing and updating a variety of controllers for operating various equipment in a building. In the illustrated embodiment, the fleet manager 440 may be located in cloud infrastructure 404 that is communicatively coupled to fleet access computers 402, buildings 408, and client devices 438. It will be appreciated that one or more components of FIG. 4 may be the same or similar to one or more other components disclosed hereby. For example, equipment controller 416 may be the same or similar to system controller 206. In another example, building controller 410 may be the same or similar to controller 112a or building controller 304. Further, aspects discussed with respect to various components in FIG. 4 may be implemented by one or more other components from one or more other embodiments without departing from the scope of this disclosure. Embodiments are not limited in this context.

The fleet access computers 402 may be utilized by entities associated with manufacturing, installing, and maintaining one or more of the controllers. For example, fleet access computers 402 may be utilized by manufacturers, local reps, and/or distributors. On the other hand, client devices 438 may be utilized by entities that own or operate one or more aspects of the building that the controllers are installed in. The fleet access computers 402 and client devices 438 may include processing devices capable of communicatively coupling with fleet manager 440 via network 406. For example, fleet access computers 402 and client devices 438 may include one or more of mobile devices, smartphones, tablets, laptops, desktops, and the like.

Entities using the fleet manager 440 may be provided with different accounts for accessing and interacting with fleet manager 440. In various embodiments, different privileges, capabilities, and permissions may be provided to the different accounts based on the associated entity. Further, different user experiences (e.g., graphical user interfaces) may be provided to different users. For example, a manufacturer may have privileges that allow it to upload new firmware updates to the fleet manager 440, a dealer may have privileges to initiate a scheduling function with clients for updating the firmware of a controller, and a client may have privileges to authorize performance of a firmware update. Further, some users of fleet manager 440 may be able to see information that is not available to other users. For example, a client may only be able to see information on controllers the client is associated with (e.g., controllers located in buildings owned or operated by the client as indicated in associated client data), a dealer may only be able to see controllers the dealer maintains (e.g., a territory of the dealer), and a manufacturer may be able to see all controllers in the fleet.

In some embodiments, privileges, capabilities, and permissions may be provided on a tier basis. For example, manufacturers may have all the privileges, capabilities, and permissions of clients and dealers may have all the privileges, capabilities, and permissions of clients. In one embodiment, a manufacturer user may be able to create dealer and client accounts, but a dealer may only be able to create client accounts. In various embodiments, fleet summaries may be generated for one or more users regarding associated controllers. In various such embodiments, fleet summaries may include one or more of version, last update information (e.g., time, date, version), scheduled/planned update information (e.g., time, date, version), historical update pass/fail summary. In one embodiment, historical update pass/fail summary may be utilized to identify troublesome controllers. For example, multiple attempts to install a previous update may be indicative of a controller that is likely to fail and should be replaced.

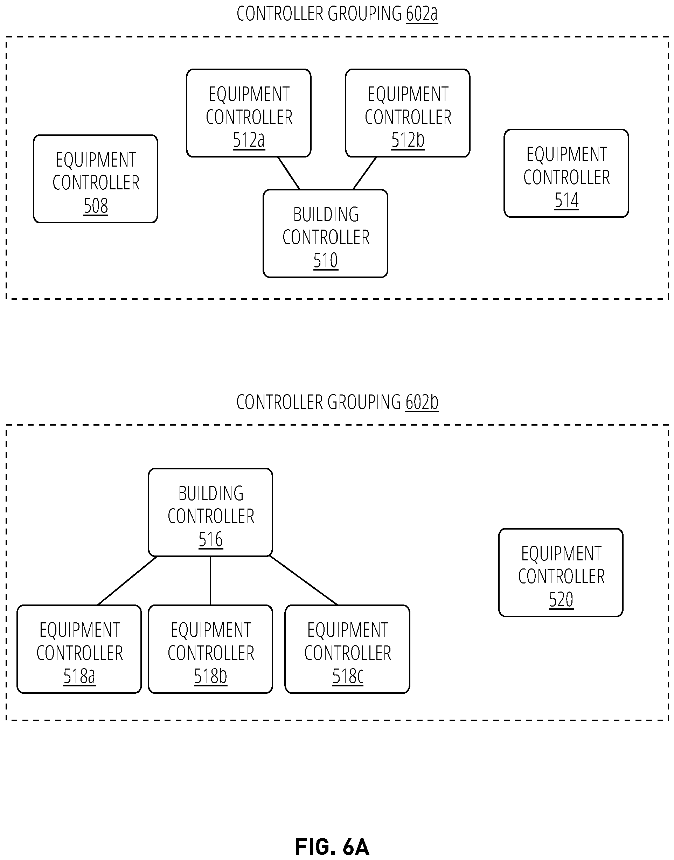

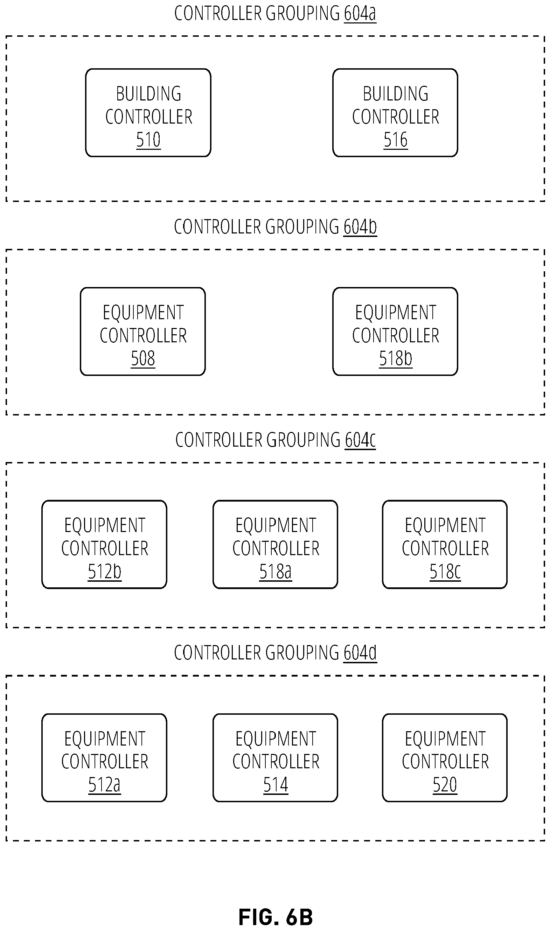

In many embodiments, the fleet manager 440 may create, maintain, and/or utilize one or more controller mapping 442 and one or more controller groupings 444 to perform various functionalities described hereby. Aspects of controller mappings are discussed in more detail below, such as with respect to FIG. 5. Aspects of controller groupings are discussed in more detail below, such as with respect to FIGS. 6A and 6B. In various embodiments, fleet manager 440 may include one or more software modules located in cloud infrastructure 404 (or another remote computing device (e.g., a server)). Although not illustrated, in some embodiments, one or more of the fleet access computers, controllers, and client devices may include software that facilitates communication with the fleet manager 440. For example, a web browser, such as on one or more fleet access computers 402 and/or client devices 438, may be utilized to communicate with the fleet manager 440. In another example, an application, such as on one or more client devices 438, may be utilized to communicate with the fleet manager 440. In yet another example, a daemon, such as on building controller 410 or equipment controller 418, may be utilized to communicate with the fleet manager 440. In yet another example, firmware may include instructions for communicating with the fleet manager 440.

Referring back to the illustrated embodiment, cloud infrastructure 404 includes processor 428 and memory 430 having fleet manager 440, controller mapping 442, and controller groupings 444. As will be appreciated, cloud infrastructure 404 may include one or more processors and one or more memories implementing or storing one or more portions of fleet manager 440, controller mapping 442, and controller groupings 444.

In operating environment 400, each of the controllers may be coupled to and control one or more devices in a building. Accordingly, building 408a includes building controller 410 communicatively coupled to equipment controllers 414a, 414b, 414c (collectively referred to as equipment controllers 414) via bus 420. Additionally, building controller 410 may be communicatively coupled to workstation 412. In some embodiments, workstation 412 may comprise a client device. Building controller 410 may be responsible for managing and controlling aspects of each of the equipment controllers 414. Equipment controller 414a may be coupled to an HVAC component 422, equipment controller 414b may be coupled to a lighting unit 424, and equipment controller 414c may be coupled to an occupancy sensor 426. In some embodiments, fleet manager 440 may only perform firmware updates when certain conditions are satisfied. For example, a firmware update may only be performed on equipment controller 414a when occupancy sensor 426 indicates that building 408a has an occupancy below a threshold occupancy level. In another example, fleet manager 440 may perform updates on multiple controllers in a building (e.g., perform updates in parallel) when outside of normal business hours and perform updates on multiple controllers in series when inside of normal business hours (to prevent multiple controllers from being taken offline at the same time). Performing updates in series/parallel may be utilized to minimize disruptions or inconveniences to operations in the building.

Building 408b includes equipment controller 418 communicatively coupled to HVAC component 432 and temperature sensor 434. In some embodiments, fleet manager 440 may only perform an update on equipment controller 418 when temperature sensor 434 indicates a temperature is above or below a threshold temperature, which may be based on the time of year or a season. For example, in the summer, the fleet manager 440 may only update equipment controller 418 when temperature sensor 434 indicates the temperature in the building 408b is below 75 degrees and, in the winter, the fleet manager 440 may only update equipment controller 418 when temperature sensor 434 indicates the temperature in the building 408b is above 70 degrees. In another example, temperature sensor 434 may include an indoor temperature sensor and an outdoor temperature sensor. In some such other examples, fleet manager 440 may only perform an update on equipment controller 418 when indoor and/or outdoor temperature thresholds are satisfied. In one example, the fleet manager 440 may only perform an update on equipment controller 418 when the outdoor temperature is within 15 degrees of the indoor temperature. In some embodiments, HVAC component 432 and temperature sensor 434 may have separate controllers.

Building 408c includes equipment controller 416 communicatively coupled to HVAC components 436a, 436b, 436c (collectively referred to as HVAC components 436). In various embodiments, each of HVAC components 436 may include one or more components of HVAC system 200. In one embodiment, each of the HVAC components may be coupled to a different controller. For example, HVAC component 436a may be coupled to system controller 206, HVAC component 436b may be coupled to indoor controller 224, and HVAC component 436c may be coupled to outdoor controller 226.

In various embodiments, fleet manager 440 may implement or perform one or more of the following operations and/or methods. It will be appreciated that although an operation or method may be described with respect to a specific set of components, it may equally apply to other sets and/or combinations of components. The fleet manager 440 may implement a method including identifying a plurality of controllers for a firmware update based on one or more of controller groupings 444. Further, each of the plurality of controllers may each include an on-board memory with a current firmware. The fleet manager 440 may determine a set of controllers located in building 408a based on controller mapping 442, and the set of controllers included in the plurality of controllers for the firmware update. The fleet manager 440 may retrieve client data corresponding to the set of controllers from controller mapping 442, then determine, based on a client-defined constraint in the client data, approval is required to perform the firmware update on the set of controllers. The fleet manager 440 may request, automatically, approval to perform the firmware update on the set of controllers based on contact information included in the client data for client device 438c. The fleet manager 440 may receive authorization to perform the firmware update on the set of controllers in response to requesting the approval, such as from client device 438c. The fleet manager 440 may communicate, over network 406, the firmware update to equipment controller 414a in the set of controllers based on the authorization. The fleet manager 440 may initiate, over the network 406, performance of the firmware update on the equipment controller 414a in the set of controllers based on the authorization.

The fleet manager 440 may determine the equipment controller 414a in the set of controllers includes sufficient on-board memory to simultaneously store the firmware update and the current firmware and communicating, over the network 406, the firmware update to the first controller for storage in the on-board memory with the current firmware based on determining the first controller includes sufficient on-board memory to simultaneously store the firmware update and the current firmware.

The fleet manager 440 may determine the equipment controller 414a in the set of controllers includes insufficient on-board memory to simultaneously store the firmware update and the current firmware and receive, over the network 406, the current firmware of the equipment controller 414a based on determining it includes insufficient on-board memory to simultaneously store the firmware update and the current firmware and/or contents of the controller. The fleet manager 440 may store the firmware and/or current contents of the equipment controller 414a in a cloud storage (e.g., memory 430) and communicate, over the network 406, the firmware update to the equipment controller 414a for storage in the on-board memory in place of the current firmware in response to storing the current firmware of the equipment controller 414a in the cloud storage.

More generally, in some embodiments, controllers may include firmware and one or more other contents, such as application software. For example, the application software may include an operating system, a database, libraries, applications, or site-specific data, such as trend logs, custom graphics, custom programs, user preferences, and/or the like. In many embodiments, the firmware and/or one or more portions of the applications software may be backed up to one or more locations prior to performing an update.

In various embodiments, the fleet manager 440 communicates the firmware update to building controller 410 that relays, over a local area network, the firmware update to the equipment controller 414a. In various such embodiments, the fleet manager 440 may determine the equipment controller 414a includes insufficient on-board memory to simultaneously store the firmware update and the current firmware and instruct the building controller 410 to backup the current firmware on the equipment controller 414a prior to relaying, over the local area network, the firmware update to the equipment controller 414a.

In some embodiments, the authorization received from client device 43 8c may be subject to at least one client-defined condition received in conjunction with the authorization. In some such embodiments, the at least one client-defined condition received in conjunction with the authorization includes a timing constraint for performing the firmware update. In several embodiments, the client-defined constraint in the client data includes a first client-defined constraint and the fleet manager 440 initiates, over the network 406, performance of the firmware update on the equipment controller 414a based on a second client-defined constraint in the client data and sensor data that indicates an operational parameter of HVAC component 422 controlled by the equipment controller 414a and the second client-defined constraint comprises a threshold for the operational parameter of the device. For example, the operational parameter of the device may include at least one of a current capacity, a current resource consumption, a current revolutions per minute, a current loading, and current production load of a facility (e.g., a manufacturing plant), or current occupant load in a facility (e.g., hospital).

In many embodiments, the client-defined constraint in the client data includes a first client-defined constraint and the fleet manager 440 initiates, over the network 406, performance of the firmware update on the equipment controller 414a based on a second client-defined constraint in the client data and sensor data generated by occupancy sensor 426. In many such embodiments, the sensor data indicates an occupancy level in the building and the second client-defined constraint comprises a threshold occupancy level for performing the firmware update.

In various embodiments, the fleet manager 440 may communicating, over network 406, the firmware update to the equipment controller 414a for storage in the on-board memory with the current firmware based on determining an available bandwidth of the network (or a local area network) for communication with the first controller exceeds a threshold amount of bandwidth. In some embodiments, the fleet manager 440 may determine performance of the firmware update on the equipment controller 414a was successful and initiate, over the network, performance of the firmware update on equipment controller 414b in response to determining the firmware update on equipment controller 414a was successful. In some such embodiments, the firmware update is performed on the equipment controller 414b using the firmware update stored in the on-board memory of the equipment controller 414a.

In several embodiments, the fleet manager 440 may determine performance of the firmware update on the equipment controller 414a was unsuccessful and initiate, over the network 406, restoration of the current firmware (and/or other contents) of the equipment controller 414a in response to determining the firmware update on it was unsuccessful. More generally, restoration of any controller may include the current firmware and/or other contents of the controller. In some embodiments, an unsuccessful update may result from one or more of the contents and/or firmware of the controller being corrupted. In many embodiments, the fleet manager 440 may determine performance of the firmware update on the equipment controller 414a was unsuccessful in response to failing to receive an update confirmation from the equipment controller 414a within a threshold amount of time.

FIG. 5 illustrates a controller mapping 502 according to some embodiments. The controller mapping 502 may include data corresponding to various buildings, controllers, and/or devices in a fleet. For example, controller mapping 502 may include controller layouts, addresses, configurations, client data (e.g., client-defined constraints, contact information). In many embodiments, the controller mapping may be utilized by a fleet manager (e.g., fleet manager 102) to identify information relevant to performing management and/or firmware updates on controllers. In the illustrated embodiment, controller mapping 502 includes buildings 506a, 506b, 506c, 506d, 506e (collectively referred to as buildings 506) connected to an external network 504. As discussed in more detail below, each of the buildings 506 may include one or more controllers, device data, and client data. It will be appreciated that one or more components of FIG. 5 may be the same or similar to one or more other components disclosed hereby. For example, controller mapping 502 may be the same or similar to controller mapping 442. In another example, building controller 516 may be the same or similar to controller 112a and/or equipment controllers 518a, 518b, 518c may be the same or similar to sub-controllers 120. Further, aspects discussed with respect to various components in FIG. 5 may be implemented by one or more other components from one or more other embodiments without departing from the scope of this disclosure. For example, client data and/or device data may be stored separate from controller mapping 502. In another example, a separate controller mapping may be maintained for each building, client, dealer, distributor, and/or controller grouping. Embodiments are not limited in this context.

In the illustrated embodiment, building 506a includes equipment controller 508, client data 522, and device data 532; building 506b includes building controller 510, equipment controllers 512a, 512b, device data 534, and client data 524; building 506c includes equipment controller 514, client data 526, and device data 536; building 506d includes building controller 516, equipment controllers 518a, 518b, 518c, client data 528, and device data 538; and building 506e includes equipment controller 520, client data 530, and device data 540. It will be appreciated that controller mapping 502 may take a variety of forms and include any number of buildings, equipment controllers, building controllers, configurations, and the like without departing from the scope of this disclosure. The controller mapping may be utilized to efficiently and readily determine the configurations and layouts of controllers as well as related information. In various embodiments, the controller mapping 502 may be created and maintained automatically by the fleet manager. For example, the fleet manager may create and maintain a controller mapping of all connected controllers. In some embodiments, the fleet manager may update the controller mapping periodically or in response to a trigger event. For example, activation of a new controller or release of a new firmware version may trigger the fleet manager to update the controller mapping.

The device data may include information that may be utilized in managing and/or updating firmware of devices in a building. In some embodiments, device data may include information regarding the building, such as the address, year built, a system overview (e.g., total HVAC capacity), builder, sub-contractors, certifications (e.g., green energy certification), and the like. In various embodiments, device data may include information regarding controllers in the building, such as model data, version data, firmware data, location (e.g., IP address), connected equipment data (e.g., sensors, HVAC compressor, sub-controllers, etc.), capabilities data, connectivity (e.g., wired, wireless, via building controller, via LAN, via Wi-Fi, etc.), memory space, processing circuitry data, operating parameters, and the like. In many embodiments, device data may include information regarding equipment in the building, such as model data, version data, firmware data, connected controller data, capabilities data, operating parameters, capacity, component data (e.g., motor size, fan size, etc.), and the like. As discussed in more detail below, controller mapping may include links to one or more controller groupings.

The client data may include various rules, constraints, and preferences of a client, manufacturer, or dealer. For example, a user of the fleet manager may configure various rules, constraints, and preferences for a controller and store them in the corresponding client data. The fleet manager may subsequently adhere to the rules, constraints, and preferences for a controller when arranging or performing an update on the controller. In some embodiments, the rules, constraints, and preferences in client data may apply to all associated controllers or a subset of the associated controllers. In some embodiments, the client data may include a schedule of the business. In some such embodiments, the client data may include a rule to only perform firmware updates outside of business hours.

At least one controller in each building may be connected to an external network (e.g., external network 504), which may include the internet, a cellular network, and the like. In one embodiment, an access point on the exterior of a facility or at a location that does not require special access may be utilized to access controllers in a facility, such as via a local area network of the facility. In some embodiments, multiple controllers in the building may have multiple connections to the external network 504. For example, equipment controller 512a may be directly connected to external network 504 and indirectly connected to external network 504 via building controller 510. In various embodiments, an internal network may connect one or more controllers in a building. For example, a local area network or bus may connect each of equipment controllers 518 with building controller 516. The connections between various controllers and/or networks may be wired or wireless. For example, equipment controller 512a may be connected to building controller 510 and external network 504 via a Wi-Fi network.

FIGS. 6A and 6B illustrate exemplary controller groupings according to some embodiments. Generally, embodiments described hereby may utilize a variety of controller groupings to organize controllers according to various parameters. The groupings may be created/updated automatically or manually, such as by one or more of the fleet manager, a client, a dealer, a distributor, a manufacturer, a controller, and the like. The illustrated embodiments include controller groupings 602a, 602b, 602c, 602d, 602e, 602f (collectively referred to as controller groupings 602). As will be discussed in more detail below, the controller groupings 602 include various groupings of the controllers in controller mapping 502. It will be appreciated that one or more components of FIGS. 6A and 6B may be the same or similar to one or more other components disclosed hereby. For example, each of the controller groupings in FIGS. 6A and 6B may be included in controller groupings 60 444. Further, aspects discussed with respect to various components in FIGS. 6A and 6B may be implemented by one or more other components from one or more other embodiments without departing from the scope of this disclosure. Embodiments are not limited in this context.

Controller groupings can be utilized for a variety of purposes. For example, the fleet manager may automatically create a controller grouping of controllers that need a firmware update, such as by creating a grouping of controllers with an old version of firmware. In another example, a building controller may create a controller grouping for equipment controller connected to the building controller. In yet another example, a client may create a first controller grouping of controllers subject to a first set of client-defined constraints and a second controller grouping of controllers subject to a second set of client-defined constraints. Accordingly, controller groupings may be created and/or utilized by the fleet manager and or users of the fleet manager (e.g., dealers, distributors, manufacturers, etc.) to create and identify associations between different controllers. Further, each controller may belong to one or more controller groupings or sub-groupings.

In various embodiments, the controller groupings may be utilized to increase the efficiency with which controllers having one or more related parameters can be identified. For example, a controller grouping may include controllers associated with a specific client. In another example, a controller grouping may include controllers of a certain type. In yet another example, a controller grouping may include controllers that can be updated without approval. In yet another example, a controller grouping may include controllers grouped by type (e.g., residential/commercial or building/equipment) or connectivity (e.g., wireless/wired or direct/indirect). In one or more embodiments, client data and/or device data may indicate which groups a controller belongs to.

In some embodiments, controller groupings may be associated with other controller groupings. In many embodiments, controller groupings may have one or more sub-groupings. For example, a first controller grouping may include every controller associated with a client. In some such examples, a plurality of sub-groupings may include controllers in each building associated with the client. In various such examples, a plurality of sub-groupings may include controllers grouped by type (e.g., HVAC controller, sensor controller, manufacturing equipment controller, motor controller, etc.). In many such examples, a first sub-grouping may include controllers that can be updated without approval and a second sub-grouping may include controllers that can only be updated with approval. In some embodiments, controller mappings, controller groupings, and/or sub-groupings may be linked to other controller mappings, controller groupings, and/or sub-groupings. For example, each controller grouping a controller belongs to may be access via the controller mapping 502 and/or each sub-grouping of a controller grouping may be accessed via the controller grouping.

As shown in FIG. 6A, controller grouping 602a includes equipment controller 508, building controller 510, equipment controller 512a, equipment controller 512b, and equipment controller 514 and controller grouping 602b includes building controller 516, equipment controllers 518, and equipment controller 520. In some embodiments, controller grouping 602a may include controllers associated with a first client and controller grouping 602b may include controllers associated with a second client. In other embodiments, controller grouping 602a may include controllers located in a first geographic region and controller grouping 602b may include controllers located in a second geographic region. In yet other embodiments, controller grouping 602a may include controllers that are maintained by a first dealer/distributor and controller grouping 602b may include controllers that are maintained by a second dealer. In some embodiments, controller groupings may correspond to levels of responsibility and/or locations, such as local, state, regional, and global. In one embodiments, different groupings may be generated for each user of the fleet manager. For example, a grouping may be generated for each manufacturer, dealer, and client that includes all associated controllers.

In many embodiments, controller groupings may include associations between controllers. For example, controller grouping 602a includes associations between building controller 510, equipment controller 512a, and equipment controller 512b indicating that they are each located in building 506b. Additionally, controller grouping 602b includes associations between building controller 516 and equipment controllers 518 indicating that they are each located in building 506d.

As shown in FIG. 6B, controller grouping 602c includes building controller 510 and building controller 516; controller grouping 602d includes equipment controller 508 and equipment controller 514; controller grouping 602e includes equipment controller 512b, equipment controller 518a, equipment controller 518c; and controller grouping 602f includes equipment controller 512a, equipment controller 518b, and equipment controller 520.

In some embodiments, controller grouping 602c may include the building controllers in controller mapping 502. In an additional, or alternative, embodiment, controller grouping 602c may include a specific type, age, facility type (e.g., commercial, residential, medical, industrial, manufacturing, etc.), or model of building controllers. In various embodiments, controller grouping 602d may include a sub-grouping of controller grouping 602a. For example, controller grouping 602d may include equipment controllers associated with the first client that are not connected to a building controller.

In many embodiments, controller grouping 602e may include equipment controllers of a specific type. For example, equipment controllers in controller grouping 602e may be connected to HVAC components. In another example, equipment controllers in controller grouping 602e may include wireless connections with the external network 504. In yet another example, equipment controllers in controller grouping 602e may include a specific model of equipment controller.

In several embodiments, controller grouping 602f may include equipment controllers with specific parameters. For example, equipment controllers in controller grouping 602f may include a specific version of firmware (e.g., a version that requires a firmware update. In another example, equipment controllers in controller grouping 602f may require their firmware to be backed up to another device (e.g., another controller or a server) prior to being updated (e.g., because they include insufficient memory for storing a firmware update simultaneously with their current firmware).

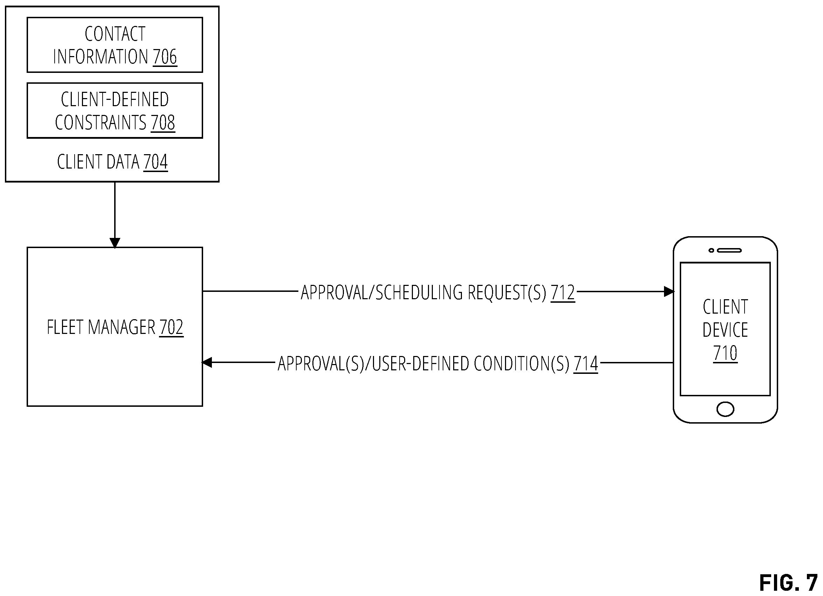

FIG. 7 illustrates various aspects of arranging a firmware update according to some embodiments. The illustrated embodiment includes fleet manager 702, client data 704 including contact information 706 and client-defined constraints 708, and client device 710. In various embodiments, the fleet manager 702 may engage in an interactive process for obtaining approval and/or scheduling a firmware update. It will be appreciated that one or more components of FIG. 5 may be the same or similar to one or more other components disclosed hereby. For example, controller mapping 502 may be the same or similar to controller mapping 442. In another example, building controller 516 may be the same or similar to controller 112a and/or equipment controllers 518a, 518b, 518c may be the same or similar to sub-controllers 120. Further, aspects discussed with respect to various components in FIG. 5 may be implemented by one or more other components from one or more other embodiments without departing from the scope of this disclosure. For example, client data and/or device data may be stored separate from controller mapping 502. In another example, a separate controller mapping may be maintained for each building, client, dealer, distributor, and/or controller grouping. Embodiments are not limited in this context.

The fleet manager 702 may engage in a number of procedures prior to performing a firmware update. In some embodiments, in response to determining a controller needs a firmware update, the fleet manager 702 may access client data 704 to determine whether any client-defined constraints 708 must be considered for performing a firmware update. For example, a client-defined constraint may require the fleet manager 702 to obtain approval to perform the firmware update. In an additional, or alternative, example, a client-defined constraint may require the firmware update be performed when the building is closed or below a threshold occupancy. In some embodiments, the fleet manager 702 may access sensor data to determine whether one or more client-defined constraints 708 are satisfied. In various embodiments, client-defined constraints 708 may refer to rules or the like that are included in client data 704 and client-defined conditions may refer to rules or the like that are received in response to one or more approval/scheduling request(s) 712. In various such embodiments, client-defined constraints 708 may apply to every firmware update for associated controllers that are performed by the fleet manager 702 while client-defined conditions may only apply to the specific firmware update(s) associated with the approval/scheduling request(s) 712.

In some embodiments, in response to determining client approval is required based on client-defined constraints 708, the fleet manager 702 may retrieve contact information 706 from client data 704. The contact information 706 may be utilized to send one or more approval/scheduling request(s) 712 to the client device 710 in order to obtain one or more approval(s)/user-defined condition(s) 714. Although the approval/scheduling request(s) 712 and approval(s)/user-defined condition(s) 714 are illustrated as single arrows between fleet manager 702 and client device 710, it will be appreciated that they may include multiple messages sent and/or received concerning multiple purposes. Further, one or more of the messages may take client-defined constraints 708 and/or user-defined conditions into consideration.

For example, fleet manager 702 may determine a suggested time for performing the firmware update based on client-defined constraints 708. The suggested time along with a request for approval may be automatically sent to client device 710 (e.g., as a text message, email, or phone call). For example, the request for approval may ask for authorization to perform the firmware update on Saturday at midnight. In some such examples, the client may respond by authorizing the firmware update on Saturday at midnight. Alternatively, the client may respond by suggesting another time/date for performing the firmware update (this may be referred to as a conditional authorization subject to a user-defined condition). If the other time/date works for performing the firmware update (e.g., based on consideration of other client-defined constraints 708 or other constraints), the fleet manager 702 may send another message confirming the other time/date for performing the firmware update. However, if the other time/date does not work (e.g., due to scheduled maintenance to the fleet manager 702), the fleet manager 702 may respond as such and, potentially suggest another time/date for the update. This process may proceed until an agreeable time/date for the update is confirmed.

Additionally, or alternatively, the client device 710 may respond with one or more other client-defined conditions. For example, the response may require fleet manager 702 to confirm building occupancy is below a threshold level prior to performing the firmware update. In another example, the response may require fleet manager 702 to confirm one or more operational parameters of controlled equipment are below a threshold prior to performing the firmware update. In some such examples, the fleet manager 702 may be required to confirm that a piece of manufacturing equipment is operating at less than half of its capacity before performing the firmware update. Approvals or authorizations that are subject to one or more conditions may be referred to as conditional approvals.

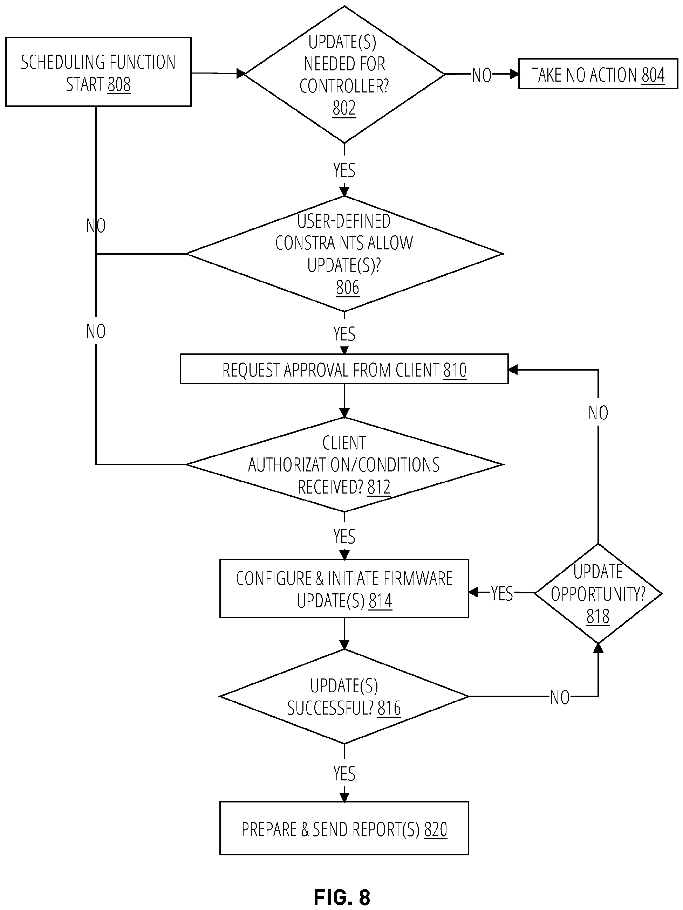

FIG. 8 illustrates a logic flow 800 for arranging and performing a firmware update, such as with a fleet manager, according to some embodiments. The logic flow 800 may be performed by processing logic that may include hardware (e.g., circuitry, dedicated logic, programmable logic, an embedded controller, a microcontroller, a processor, a processing device, a central processing unit (CPU), a system-on-chip (SoC), etc.), software (e.g., instructions running/executing on a processing device), firmware (e.g., microcode), or a combination thereof. In some embodiments, at least a portion of logic flow 800 may be performed by one or more components of server 104 or cloud infrastructure 404. Embodiments are not limited in this context.

With reference to FIG. 8, logic flow 800 illustrates example functions used by various embodiments. Although specific function blocks ("blocks") are disclosed in logic flow 800, such blocks are examples. That is, embodiments are well suited to performing various other blocks or variations of the blocks recited in logic flow 800. It is appreciated that the blocks in logic flow 800 may be performed in an order different than presented, and that not all of the blocks in logic flow 800 may be performed.

Logic flow 800 begins at block 802, where the scheduling function may start. For example, the scheduling function may start in response to fleet manager 102 identifying a new version is available. At decision block 804, it may determine whether an update is needed for a controller. For example, fleet manager 702 may evaluate device data 532 in controller mapping 502 to determine whether a firmware update is needed for equipment controller 508. If an update is not needed for the controller, the logic flow 800 may proceed to block 806, where no action is taken on the controller. In some embodiments, in response to determining to take no action, the logic flow 800 may restart for a different controller.

However, if an update is needed for the controller, the logic flow 800 may proceed to block 806. At decision block 808, it may be determined whether associated user-defined constraints allow the update. For example, user-defined constraints for equipment controller 508 may be accessed in client data 522 of controller mapping 502. If the user-defined constraints do not allow for the update, the logic flow 800 may proceed to block 806 and no action may be taken on the controller. As previously mentioned, in response to determining to take no action, the logic flow 800 may restart for a different controller. If the user-defined constraints do allow for the update, the logic flow 800 may proceed to block 810.

At block 810 approval may be requested from the client. For example, client contact information may be retrieved from client data 522 and utilized to send a message to a client device requesting approval. Proceeding to decision block 812, it may be determined whether client authorization and/or user-defined conditions are received. If client authorization and/or conditions are not received, the logic flow 800 may proceed to block 802 and the scheduling function may be restarted. In some embodiments, logic flow 800 may return to block 802 from decision block 812 if no response is received within a threshold amount of time. However, if client authorization and/or conditions are received, the logic flow 800 may proceed to block 814, which will be discussed below. In some embodiments, block 810 and decision block 812 may include an interactive process between the fleet manager and a client device. For example, a series of communications may be utilized to attain approval and schedule the firmware update. In various embodiments, one or more client-defined conditions may be received as part of this process. For example, a time window or operating parameter threshold of one or more controllers or connected equipment may be received as part of the interactive process.

Referring back to block 814, in response to receiving client authorization and/or conditions, the logic flow 800 may configure and initiate the firmware update. Configuring and initiating the firmware update may be subject to any conditions received as part of the interactive process (referred to as client-defined conditions) and any conditions identified in the client data (referred to as client-defined constraints). Continuing to decision block 816, it may be determined if the update was successful. If the update is not successful, the logic flow 800 may proceed to decision block 818. In some embodiments, if a confirmation that the update was successful is not received within a threshold amount of time, it may be determined the update was not successful.

At decision block 818 it may be determined whether there is another update opportunity available. For example, if a client-defined condition can no longer be satisfied (e.g., a timing window), it may be determined there is not another update opportunity available. If there is not another update opportunity available, the logic flow 800 may return to block 810. However, if there is another update opportunity available, the logic flow 800 may return to block 814. Referring back to decision block 816, if the update is successful, the logic flow 800 may proceed to block 820. At block 820 a report regarding the update may be prepared and sent to, or stored in, one or more locations. For example, the report may be sent to the client device, sent to a workstation, sent to a fleet access computer, and/or stored in client data. In some embodiments, notifications of the report may be sent to one or more client devices (e.g., client device 438b and/or client device 438c), one or more workstations (e.g., workstation 412), and/or one or more fleet access computers (e.g., fleet access computer 402a and/or fleet access computer 402b). In some such embodiment, the notification may include a link for viewing the report. In various embodiment, the report may indicate what was update and parameters of the update, such as operational parameters before and/or after the update.

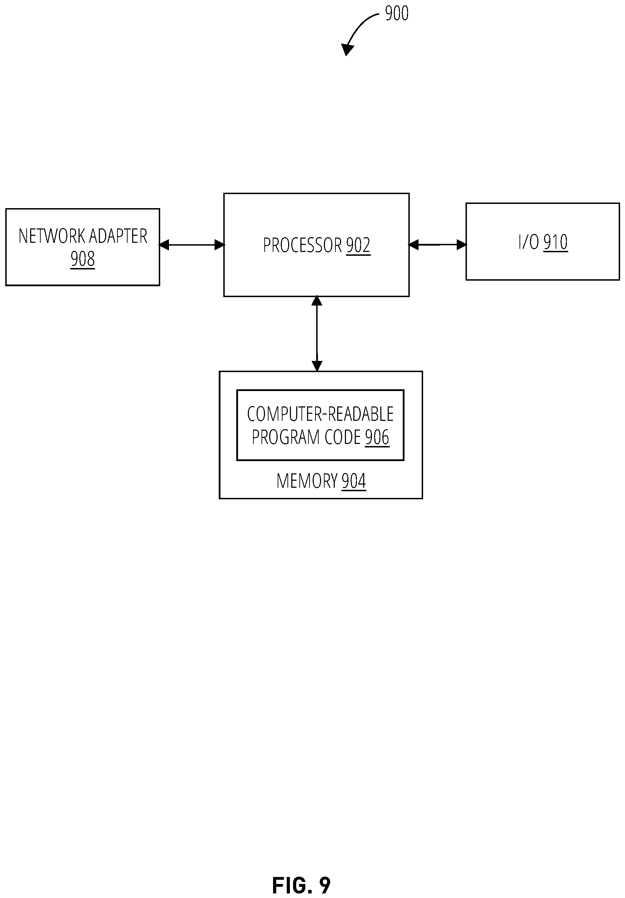

FIG. 9 illustrates the control circuitry 900 according to some example embodiments of the present disclosure. In some examples the control circuitry includes some or all of the one or more of controllers 112, one or more of sub-controllers 120, system controller 206, the indoor controller 224, the outdoor controller 226, one or more of equipment controllers 414, one or more of equipment controllers 414, 418, 416, and the like. In some examples, the control circuitry 900 may include one or more of each of a number of components such as, for example, a processor 902 connected to a memory 904. The processor 902 is generally any piece of computer hardware capable of processing information such as, for example, data, computer programs and/or other suitable electronic information. The processor includes one or more electronic circuits some of which may be packaged as an integrated circuit or multiple interconnected integrated circuits (an integrated circuit at times more commonly referred to as a "chip"). The processor 902 may be a number of processors, a multi-core processor or some other type of processor, depending on the particular embodiment.

The processor 902 may be configured to execute computer programs such as computer-readable program code 906, which may be stored on-board the processor or otherwise stored in the memory 904. In some examples, the processor may be embodied as or otherwise include one or more ASICs, FPGAs or the like. Thus, although the processor may be capable of executing a computer program to perform one or more functions, the processor of various examples may be capable of performing one or more functions without the aid of a computer program.

The memory 904 is generally any piece of computer hardware capable of storing information such as, for example, data, computer-readable program code 906 or other computer programs, and/or other suitable information either on a temporary basis and/or a permanent basis. The memory may include volatile memory such as random access memory (RAM), and/or non-volatile memory such as a hard drive, flash memory or the like. In various instances, the memory may be referred to as a computer-readable storage medium, which is a non-transitory device capable of storing information. In some examples, then, the computer-readable storage medium is non-transitory and has computer-readable program code stored therein that, in response to execution by the processor 902, causes the fleet manager 102 or fleet manager 440 to perform various operations as described herein, some of which may in turn cause the HVAC system 200 to perform various operations.

In addition to the memory 904, the processor 902 may also be connected to one or more peripherals such as a network adapter 908, one or more input/output (I/O) devices 910 or the like. The network adapter 908 is a hardware component configured to connect the control circuitry 900 to a computer network to enable the control circuitry to transmit and/or receive information via the computer network. The I/O 910 may include one or more input devices capable of receiving data or instructions for the control circuitry, and/or one or more output devices capable of providing an output from the control circuitry. Examples of suitable input devices include a keyboard, keypad or the like, and examples of suitable output devices include a display device such as a one or more light-emitting diodes (LEDs), a LED display, a liquid crystal display (LCD), or the like.

As explained above and reiterated below, the present disclosure includes, without limitation, the following example implementations.

Clause 1. A computer-implemented method for managing firmware updates for a fleet of controllers, the method comprising: identifying a plurality of controllers for a firmware update based on a predefined controller grouping, wherein the plurality of controllers each include an on-board memory with a current firmware; determining a set of controllers located in a building, the set of controllers determined based on a controller mapping, and the set of controllers included in the plurality of controllers for the firmware update; retrieving client data corresponding to the set of controllers; determining, based on a client-defined constraint in the client data, approval is required to perform the firmware update on the set of controllers; requesting, automatically, approval to perform the firmware update on the set of controllers based on contact information included in the client data; receiving authorization to perform the firmware update on the set of controllers in response to requesting the approval; communicating, over a network, the firmware update to a first controller in the set of controllers based on the authorization; and initiating, over the network, performance of the firmware update on the first controller in the set of controllers based on the authorization.

Clause 2. The computer-implemented method of the preceding clause, further comprising: determining the first controller in the set of controllers includes sufficient on-board memory to simultaneously store the firmware update and the current firmware; and communicating, over the network, the firmware update to the first controller for storage in the on-board memory with the current firmware based on determining the first controller includes sufficient on-board memory to simultaneously store the firmware update and the current firmware.

Clause 3. The computer-implemented method of any of the preceding clauses, further comprising: determining the first controller in the set of controllers includes insufficient on-board memory to simultaneously store the firmware update and the current firmware; receiving, over the network, the current firmware of the first controller based on determining the first controller in the set of controllers includes insufficient on-board memory to simultaneously store the firmware update and the current firmware; storing the current firmware of the first controller in a cloud storage; and communicating, over the network, the firmware update to the first controller for storage in the on-board memory in place of the current firmware in response to storing the current firmware of the first controller in the cloud storage.

Clause 4. The computer-implemented method of any of the preceding clauses, wherein the network comprises a first network and a second network and communicating the firmware update to a first controller includes communicating, over the first network, the firmware update to a building controller that relays, over a second network, the firmware update to the first controller.

Clause 5. The computer-implemented method of any of the preceding clauses, further comprising: determining the first controller in the set of controllers includes insufficient on-board memory to simultaneously store the firmware update and the current firmware; and instructing the building controller to back up the current firmware on the first controller prior to relaying, over the second network, the firmware update to the first controller.

Clause 6. The computer-implemented method of any of the preceding clauses, wherein the authorization is subject to at least one client-defined condition received in conjunction with the authorization.

Clause 7. The computer-implemented method of any of the preceding clauses, wherein the at least one client-defined condition received in conjunction with the authorization comprises a timing constraint for performing the firmware update.

Clause 8. The computer-implemented method of any of the preceding clauses, wherein the client-defined constraint in the client data includes a first client-defined constraint and the method further comprises initiating, over the network, performance of the firmware update on the first controller in the set of controllers based on a second client-defined constraint in the client data and sensor data associated with the building the first controller is located in.

Clause 9. The computer-implemented method of any of the preceding clauses, wherein the sensor data indicates an occupancy level in the building and the second client-defined constraint comprises a threshold occupancy level for performing the firmware update.

Clause 10. The computer-implemented method of any of the preceding clauses, wherein the sensor data indicates an operational parameter of a device controlled by the first controller and the second client-defined constraint comprises a threshold for the operational parameter of the device, and wherein the operational parameter of the device includes at least one of a current capacity, a current resource consumption, a current revolutions per minute, and a current loading.

Clause 11. The computer-implemented method of any of the preceding clauses, further comprising communicating, over a network, the firmware update to the first controller for storage in the on-board memory with the current firmware based on determining an available bandwidth of the network for communication with the first controller exceeds a threshold amount of bandwidth.

Clause 12. The computer-implemented method of any of the preceding clauses, further comprising: determining performance of the firmware update on the first controller was successful; and initiating, over the network, performance of the firmware update on a second controller in the set of controllers in response to determining the firmware update on the first controller was successful.

Clause 13. The computer-implemented method of any of the preceding clauses, wherein the firmware update is performed on the second controller using the firmware update stored in the on-board memory of the first controller.

Clause 14. The computer-implemented method of any of the preceding clauses, wherein the first controller controls operation of a heating, ventilation, and air conditioning (HVAC) component of the building.

Clause 15. The computer-implemented method of any of the preceding clauses, comprising determining performance of the firmware update on the first controller was unsuccessful; and initiating, over the network, restoration of the current firmware on the first controller in response to determining the firmware update on the first controller was unsuccessful.

Clause 16. The server computer system of Clause 15 comprising determining performance of the firmware update on the first controller was unsuccessful in response to failing to receive an update confirmation from the first controller within a threshold amount of time.

Clause 17. A server computer system for managing a fleet of controllers, comprising: a memory; and a processor coupled to the memory configured to: identify, by a server system, a plurality of controllers for a firmware update based on a predefined controller grouping, wherein the plurality of controllers each include an on-board memory with a current firmware; determine, by the server system, a set of controllers located in a building, the set of controllers determined based on a controller mapping, and the set of controllers included in the plurality of controllers for the firmware update; retrieve, by the server system, client data corresponding to the set of controllers; determine, by the server system and based on a client-defined constraint in the client data, approval is required to perform the firmware update on the set of controllers; request, automatically and by the server system, approval to perform the firmware update on the set of controllers based on contact information included in the client data; receive, by the server system, authorization to perform the firmware update on the set of controllers in response to requesting the approval; communicate, over a network and by the server system, the firmware update to a first controller in the set of controllers based on the authorization; and initiating, over the network and by the server system, performance of the firmware update on the first controller in the set of controllers based on the authorization.

Clause 18. The server computer system of the preceding clause, the processor coupled to the memory further configured to: determine, by the server system, the first controller in the set of controllers includes sufficient on-board memory to simultaneously store the firmware update and the current firmware; and communicate, over the network and by the server system, the firmware update to the first controller for storage in the on-board memory with the current firmware based on determining the first controller includes sufficient on-board memory to simultaneously store the firmware update and the current firmware.

Clause 19. The server computer system of any of Clauses 17-18, the processor coupled to the memory further configured to: determine, by the server system, performance of the firmware update on the first controller was unsuccessful; and initiate, over the network and by the server system, restoration of the current firmware on the first controller in response to determining the firmware update on the first controller was unsuccessful.

Clause 20. The server computer system of any of Clauses 17-19, the processor coupled to the memory further configured to determine, by the server system, performance of the firmware update on the first controller was unsuccessful in response to failing to receive an update confirmation from the first controller within a threshold amount of time.

Clause 21. A server computer system for managing a fleet of controllers, comprising a memory; and a processor coupled to the memory configured to cause a server system to perform a method in accordance with any one of Clauses 1-16.

Clause 21. The server computer system of any of Clauses 17-20, wherein the server system comprises a cloud-based computing system.

Clause 22. A non-transitory computer readable storage medium including instructions that, when executed by a processor, cause the processor to perform operations for managing a fleet of controllers, the operations comprising: identifying a plurality of controllers for a firmware update based on a predefined controller grouping, wherein the plurality of controllers each include an on-board memory with a current firmware; determining a set of controllers located in a building, the set of controllers determined based on a controller mapping, and the set of controllers included in the plurality of controllers for the firmware update; retrieving client data corresponding to the set of controllers; determining, based on a client-defined constraint in the client data, approval is required to perform the firmware update on the set of controllers; requesting, automatically, approval to perform the firmware update on the set of controllers based on contact information included in the client data; receiving authorization to perform the firmware update on the set of controllers in response to requesting the approval; communicating, over a network, the firmware update to a first controller in the set of controllers based on the authorization; and initiating, over the network, performance of the firmware update on the first controller in the set of controllers based on the authorization.

Clause 23. A non-transitory computer readable storage medium including instructions that, when executed by a processor, cause the processor to perform a method in accordance with any of Clauses 1-16.

In a server computer system as disclosed herein (e.g. in accordance with any of Clauses 17-21), it may be that a processor coupled to the memory and configured to perform respective actions or cause respective actions is so configured by virtue of executing instructions stored on the memory. For example, it may be that the memory comprises instructions which, when executed by the processor, are configured to cause performance of the respective actions (e.g. by the server system).

While exemplary embodiments have been shown and described, modifications thereof can be made by one skilled in the art without departing from the scope or teachings herein. The embodiments described herein are exemplary only and are not limiting. Many variations and modifications of the systems, apparatus, and processes described herein are possible and are within the scope of the disclosure. Accordingly, the scope of protection is not limited to the embodiments described herein, but is only limited by the claims that follow, the scope of which shall include all equivalents of the subject matter of the claims. Unless expressly stated otherwise, the steps in a method claim may be performed in any order. The recitation of identifiers such as (a), (b), (c) or (1), (2), (3) before steps in a method claim are not intended to and do not specify a particular order to the steps, but rather are used to simplify subsequent reference to such steps.

## Claims

1. A computer-implemented method for managing firmware updates for a fleet of controllers, the method comprising:
identifying a plurality of controllers for a firmware update based on a predefined controller grouping, wherein the plurality of controllers each include an on-board memory with a current firmware;
determining a set of controllers located in a building, the set of controllers determined based on a controller mapping, and the set of controllers included in the plurality of controllers for the firmware update;
retrieving client data corresponding to the set of controllers;
determining, based on a client-defined constraint in the client data, approval is required to perform the firmware update on the set of controllers;
requesting, automatically, approval to perform the firmware update on the set of controllers based on contact information included in the client data;
receiving authorization to perform the firmware update on the set of controllers in response to requesting the approval;
communicating, over a network, the firmware update to a first controller in the set of controllers based on the authorization; and
initiating, over the network, performance of the firmware update on the first controller in the set of controllers based on the authorization.

2. The computer-implemented method of claim 1, comprising:
determining the first controller in the set of controllers includes sufficient on-board memory to simultaneously store the firmware update and the current firmware; and
communicating, over the network, the firmware update to the first controller for storage in the on-board memory with the current firmware based on determining the first controller includes sufficient on-board memory to simultaneously store the firmware update and the current firmware.

3. The computer-implemented method of any one of claims 1 and 2, comprising:
determining the first controller in the set of controllers includes insufficient on-board memory to simultaneously store the firmware update and the current firmware;
receiving, over the network, the current firmware of the first controller based on determining the first controller in the set of controllers includes insufficient on-board memory to simultaneously store the firmware update and the current firmware;
storing the current firmware of the first controller in a cloud storage; and
communicating, over the network, the firmware update to the first controller for storage in the on-board memory in place of the current firmware in response to storing the current firmware of the first controller in the cloud storage.

4. The computer-implemented method of any one of claims 1-3, wherein the network comprises a first network and a second network and communicating the firmware update to the first controller includes communicating, over the first network, the firmware update to a building controller that relays, over a second network, the firmware update to the first controller.

5. The computer network of claim 4, further comprising:
determining the first controller in the set of controllers includes insufficient on-board memory to simultaneously store the firmware update and the current firmware; and
instructing the building controller to backup the current firmware on the first controller prior to relaying, over the second network, the firmware update to the first controller.

6. The computer-implemented method of any one of the preceding claims, wherein the authorization is subject to at least one client-defined condition received in conjunction with the authorization;
optionally wherein the at least one client-defined condition received in conjunction with the authorization comprises a timing constraint for performing the firmware update.

7. The computer-implemented method of any one of the preceding claims, wherein the client-defined constraint in the client data includes a first client-defined constraint and the method further comprises initiating, over the network, performance of the firmware update on the first controller in the set of controllers based on a second client-defined constraint in the client data and sensor data associated with the building the first controller is located in.

8. The computer-implemented method of claim 7,
wherein the sensor data indicates an occupancy level in the building and the second client-defined constraint comprises a threshold occupancy level for performing the firmware update; or
wherein the sensor data indicates an operational parameter of a device controlled by the first controller and the second client-defined constraint comprises a threshold for the operational parameter of the device, and wherein the operational parameter of the device includes at least one of a current capacity, a current resource consumption, a current revolutions per minute, and a current loading.

9. The computer-implemented method of any one of the preceding claims, further comprising communicating, over a network, the firmware update to the first controller for storage in the on-board memory with the current firmware based on determining an available bandwidth of the network for communication with the first controller exceeds a threshold amount of bandwidth.

10. The computer-implemented method of any one of the preceding claims, further comprising:
determining performance of the firmware update on the first controller was successful; and
initiating, over the network, performance of the firmware update on a second controller in the set of controllers in response to determining the firmware update on the first controller was successful;
optionally wherein the firmware update is performed on the second controller using the firmware update stored in the on-board memory of the first controller.

11. The computer-implemented method of any one of the preceding claims, wherein the first controller controls operation of a heating, ventilation, and air conditioning (HVAC) component of the building.

12. A server computer system for managing a fleet of controllers, comprising:
a memory; and
a processor coupled to the memory configured to cause a server system to perform a method in accordance with any one of the preceding claims.

13. The server computer system of claim 12, the processor coupled to the memory further configured to:
determine, by the server system, performance of the firmware update on the first controller was unsuccessful; and
initiate, over the network and by the server system, restoration of the current firmware on the first controller in response to determining the firmware update on the first controller was unsuccessful
optionally the processor coupled to the memory further configured to determine, by the server system, performance of the firmware update on the first controller was unsuccessful in response to failing to receive an update confirmation from the first controller within a threshold amount of time.

14. The server computer system of any one of claims 12-13, wherein the server system comprises a cloud-based computing system.

15. A non-transitory computer readable storage medium including instructions that, when executed by a processor, cause the processor to perform a method in accordance with any one of claims 1-11.
